# EUROPEAN PATENT SPECIFICATION

(11) **EP 0 528 748 B1**
(45) Date of publication and mention of the grant of the patent: **16.10.1996**
(21) Application number: 92500106.7
(22) Date of filing: 13.08.1992
(51) Int. Cl.: B30B 15/28

(54) **Folding table for press, with a security device to cause the immediate fall of the said table in the case of an overload**
Klapptisch für eine Presse mit einer Sicherheitseinrichtung zum sofortigen Abstützen des Tisches bei Überlast
Table pliante pour une presse avec dispositif de sécurité provocant une chute immédiadiate de la table en cas de surcharge

(30) Priority: 14.08.1991 ES 9101895
(43) Date of publication of application: 24.02.1993
(73) Proprietor: Arques Lledos, Manuel, E-08915-Badalona, Barcelona (ES)
(72) Inventor: Arques Lledos, Manuel, E-08915-Badalona, Barcelona (ES)
(74) Representative: Gomez-Acebo y Pombo, José Miguel

(56) References cited:
- FR-A- 468 121
- FR-A- 2 139 955
- GB-A- 777 093
- US-A- 2 356 204

## Description

The invention consists of a table for a vertical press guided at its ends by a system of guides identical or similar to that of the press slide, supported at the bottom on an articulated mechanism which transmits the working forces to a second table, called the countertable, joined to the frame of the press and on which the articulated mechanism is supported. The system is kept rigid with an electromagnet located under said countertable, which, when the electrical power is switched on, attracts a counterweight which is linked by its ends through a groove in the centre of the countertable by four adjustable rods to the ends of the central ball-joint of the articulated device.

In normal working conditions, the system remains rigid but, if an overload control coupled to the press detects an anomaly, wear or a broken tool, burring, or loose parts, heating, deficiencies in plate feed, etc., the electrical current in the electromagnet is cut off, the counterweight drops and, with the four rods, which are adjustable at the ends and which are connected to the flanges of the central ball-joint of the articulated mechanism, it drags said ball-joint, the device folds and the table drops, so that the tool moves outside the range of the press slide, preventing damage to the tool or the press.

Between the two tables and under the electromagnet, there are stroke limiters and damper cylinders which dampen the stroke limiters, making it possible to return to the initial working position once the anomaly has passed.

Rapid precision presses make it possible to obtain pieces by pressing, cutting and deformation of materials, quickly and accurately, by the work done by the pressure or impact of a moving element known as the slide on the tool which is secured on another fixed element called the table, which is generally part of the press frame. FR-A-468 121 shows a hinged press table fitted with an automatic safety device desined to lower it immediatly in case of overload.

For some decades, these machines have undergone improvements and refinements, particularly in the systems for guides, lubrication and traction of the slide, material feed, tools, moulds and pressing and cutting dies, making it possible to greatly increase their speed and performance. Some rapid mechanical precision presses reach working speeds of more than a thousand blows per minute. The cutting and pressing tools, the moulds and dies, i.e. the working tools, have been improved and are made of high quality materials such as special steels, ceramic materials, etc. ... with highly accurate and complex forms, making them increasingly invaluable. Because of the speeds at which they have to operate, any fault such as a loose screw, burring, etc., ... can damage them seriously.

To prevent such damage, and the piercing of the press, many have overload warning systems and automatic braking devices for the slide movement. However, because of the speed at which the slide moves, particularly on rapid presses, under its own inertia, some impacts do occur before the slide stops so that, in many cases, by that time, the damage has been done.

The invention as claimed in claim 1 has been developed to prevent this damage or harm to the tool or the press as a result of the anomalies referred to above, which may arise while the press is operating.

The benefit of the invention of the foldable table with an automatic safety device is that the tool is disconnected immediately by the downward movement of the table, so that the tool is out of the reach of the bottom position of the slide stroke.

Press tables must be rigid and very strong as they must bear the impact of the slide on the tool and absorb all stresses without deformations or vibrations. The invention was developed taking account of the performance required of the table: therefore, all its components are extremely strong, giving the assembly great rigidity, free of vibrations or deformations which might affect the precision or correct operation of the press.

The following is a description of the invention, referred to the attached drawings:
Figure 1 - Operating position
Figure 2 - Off position
Figure 3 - The two superimposed positions diagrammatically show the operation of the device.

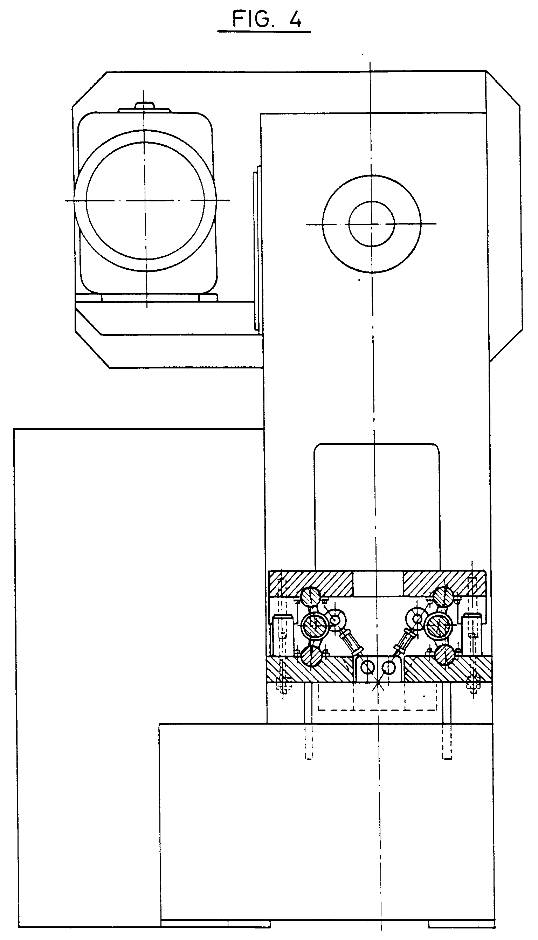

Figure 4 shows the device in its position mounted on the press, seen in profile.
Figure 5 shows detail B of the device in Figure 4, cut along B-B, from their central axis and enlarged longitudinal axis.

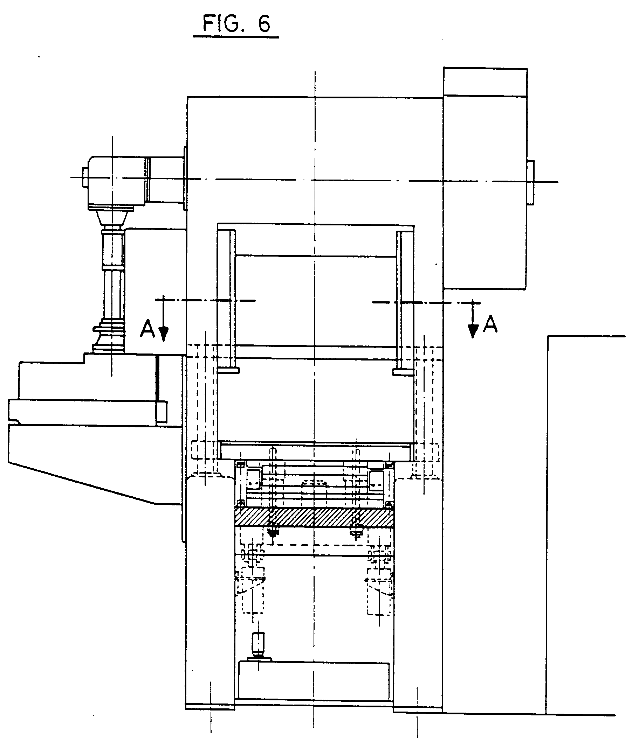

Figures 6, 7 and 8 refer to the table's vertical displacement system.

The following numerical references indicate the different parts making up the assembly:

| Reference | Description | Number |
|---|---|---|
| 1 | Folding table | 1 |
| 2 | Fixed table (countertable) | 1 |
| 3 | Upper part of the articulated mechanism | 2 |
| 4 | Lower part of the articulated mechanism | 2 |
| 5 | Electromagnet counterweight | 1 |
| 6 | Electromagnet | 1 |
| 7 | Adjustable brace | 4 |
| 8 | Table stroke limiter | 2 |
| 9 | Damper cylinder with lift stop on shaft | 4 |
| 10 | Electromagnet cylinder | 2 |
| 11 | Electromagnet stroke limiter | 4 |
| 12 | Securing flanges (3, 4) to 1 and 2 | 8 |
| 13 | Flange bolts | 16 |
| 14 | Securing flanges, central ball-joint ends | 4 |
| 15 | Securing bolts, central ball-joint ends | 16 |
| 16 | Adjustable brace end securing flange | 4 |
| 17 | Bolt to fix adjustable brace end securing flange | 16 |
| 18 | Table end guide strips | 8 |
| 19 | Slide and table guide shafts | 4 |
| 20 | Register side cover (control) | 2 |
| 21 | Table end stop | 4 |

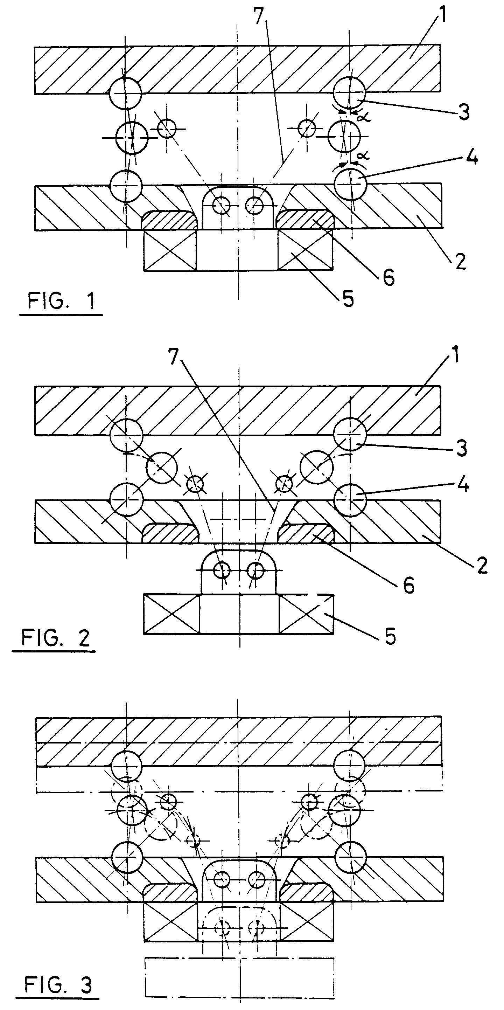

Summarising the subject of the invention, it consists of a mobile table (1) supported on the mechanism (3, 4) which is in turn supported on the fixed countertable (2) under which there is an electromagnet (6) which attracts the counterweight (5) linked by the rods (7) to the central ball joint of the mechanism (3, 4) (fig. 1).

When an overload control cuts off the electrical supply to the electromagnet (6) its counterweight (5) drops, the mechanism (3, 4) folds and the table (1) drops (fig. 2), disconnecting the tool.

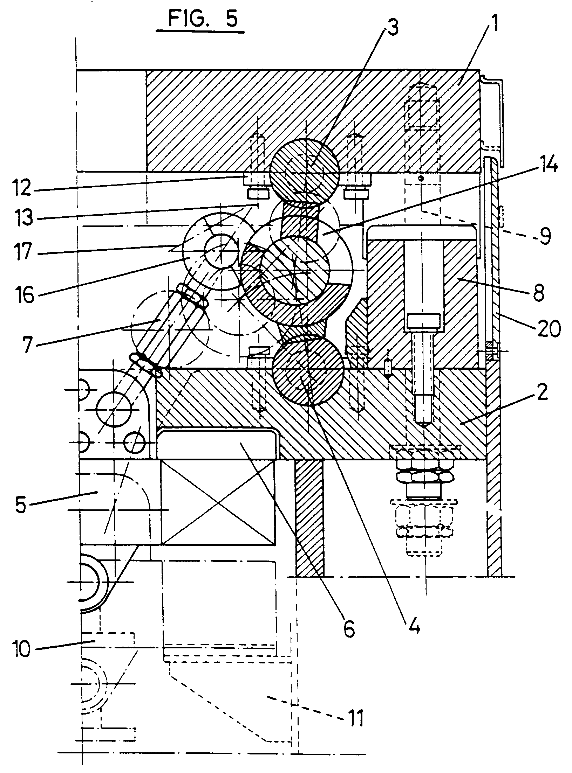

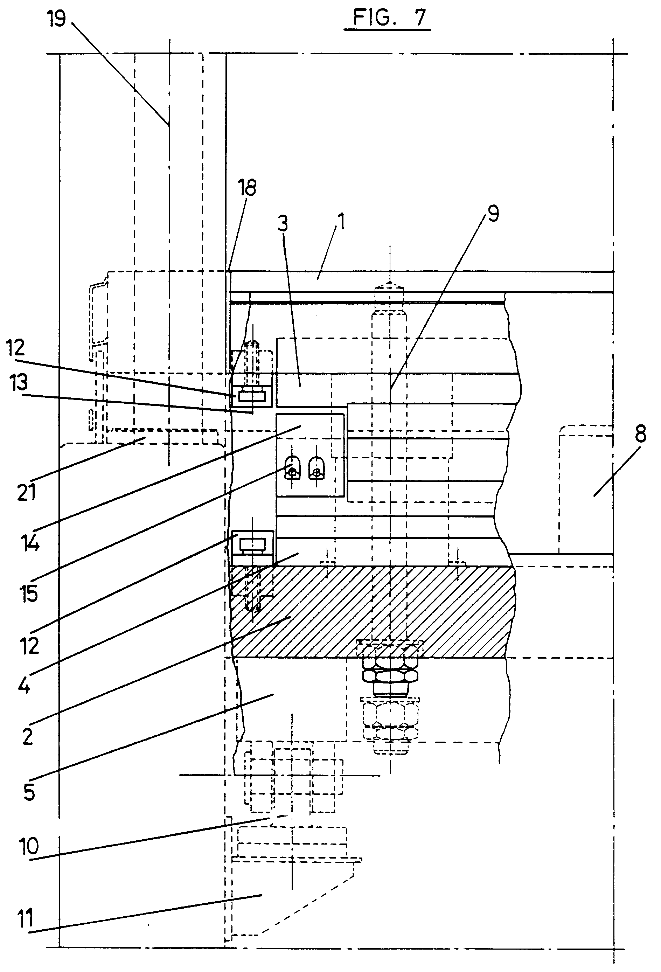

The cylinders (9, 10) and the stops (8, 11) under the table (1) and the counterweight (5) (fig. 5, 7) respectively dampen and limit the movement of (1 and 5) returning them to the position in figure 1 when the fault is corrected.

The mechanism (3, 4) is housed in semicircular grooves under the table (1) and above the countertable (2): the central ball-joint is formed by inserting the lower shaft of component (3) in the upper half-tube of component (4): the shafts of said two components (3, 4) must form an angle α> 0 with the main shaft in the working position (fig. 1).

A more detailed description referred to the figures shows the moving table, 1, supported at the bottom on the upper shaft of component 3, the upper part of the articulated mechanism. This component, 3, is made up of two cylindrical shafts connected by a prism-shaped element. The whole of the upper shaft is housed lengthwise up to half its diameter in a semi-cylindrical groove in- the lower surface of the moving table, 1, and is secured to the table at its two ends by two flanges, 12, and four bolts, 13, which clamp it to said lower surface of the moving table, 1, with the two lugs of smaller diameter than the shaft, at each end. The lower shaft of this component, 3, is housed up to half its diameter in the upper part of the lower component 4 which is shaped like a half-tube, and which is secured to the bottom shaft of component, 3, using two flanges, 14, each held by four bolts, 15, using the two lugs, of smaller diameter, located at each end of the lower shaft of component 3. The lower component, 4, of the articulated mechanism is formed at the top by a semi-tubular or semi-cylindrical part which, up to half its diameter, contains the lower shaft of the upper component, 3, secured to it by the two lugs of smaller diameter at its two ends, using the two flanges, 14, in turn held by four bolts, 15, in each flange. At these two ends of the upper part of the lower component, 4 of the articulated mechanism, there is another flange, 16, in the opposite direction to flange 14, which is secured to the two ends of the upper part of the component, 4, at the upper end of the adjustable bracing 7, which in turn fastens it to the ends of the electromagnetic counterweight, 5. This component, 4, is made up in its lower section by a cylindrical shaft which is fully housed, up to half its diameter, in a semi-cylindrical shaft in the upper surface of countertable, 2, and secured to it with the flanges, 12, and bolts, 13, two in each flange, in the lugs at each of its ends, in the same way as the upper shaft of component 3, to the lower part of the table, 1. The lower cylindrical shaft and the semi-tubular upper element of this component, 4, are connected by a V-shaped prismatic element throughout its length, except for the lugs.

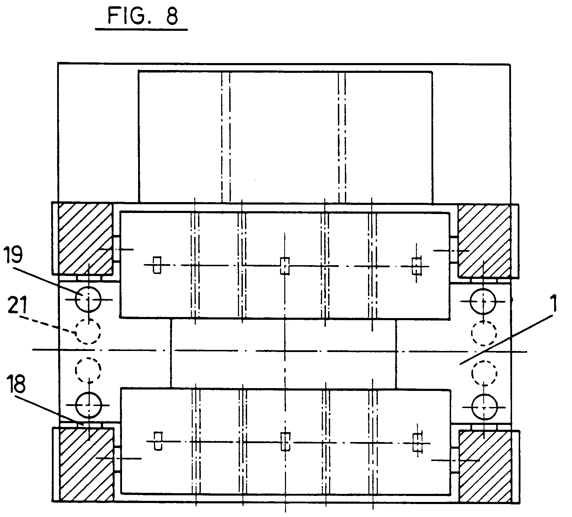

The ends of the moving table, 1, are guided by cylinders, 19, and the guides, 18, both secured on the press frame, Fig. 7, 8. Screwed to the bottom are the four shafts, 9, of the cylinders which are used to dampen the drop, and to lift-the table to its operating position: at their opposite end are the stops regulating the table height. The two drop stops, 8, in the centre, and the four stops, 21, at the ends, limit the lower displacement position of the moving table, 1.

The electromagnet is located under the countertable, 2; it attracts the electromagnetic counterweight, 5, which is linked at its ends by the braces, 7, to the central ball-joint of the articulated mechanism, 3, 4. At the bottom, counterweight 5 has the cylinders which dampen the drop, and the counterweight lifters, for taking it to its working position, 10, and the drop stroke limiters, 11.

The safety device which drops the table operates as follows:

In the working position (Fig. 1), current flows through the electromagnet, 6, which attracts and holds the electromagnetic counterweight, 5, secured with the braces, 7, fastened at the ends with the flange, 16, to the central ball-joint of the articulated mechanism. In this position, the angle formed by the shafts of the upper and lower components, 3 and 4, with the main shaft of the articulated mechanism must be α> 0, but it must also be as small as possible so as not to overload the electromagnet, which might affect the rigidity of the assembly. This angle must never be α = 0, as this would block the device.

In this position, the device as a whole is kept rigid, the stresses created by the impacts of the slide vertically on the tool secured on the moving table, 1, are transmitted through the articulated mechanism on the countertable, 2, and from there to the press frame. Lateral stresses are absorbed by the table guide system, 1, at the ends, 18 and 19; because of the small size of angle α, a very small part of the stresses is transmitted through braces, 7, to the electromagnet unit, 6 and 5.

When an overload control device adapted to the press detects an anomaly, burring, a failure in the supply of plate, differences of plate thickness, loose or sloppy bolts in the tool, in the press, etc. etc., it cuts off the current to the electromagnet, 6, which allows the counterweight, 5, to drop (Fig. 2), moving with it the central ball-joint of the articulated mechanism, 3, 4, by means of the braces, 7, secured to its flange, 16. The articulated mechanism folds, moving the table, 1, with it, so that the tool is immediately placed beyond the reach of the lowest point of the slide stroke, preventing damage to said tool or to the press. Once the anomaly has been repaired, the damper and lifting cylinders, 9 and 10, are operated, and they push table 1 and the electromagnetic counterweight 5 to the working position, the current to the electromagnet, 6, is restored and the press can resume production.

Having thus sufficiently described the invention, it is hereby recorded that, if this does not alter its subject-matter, variations may be made to all aspects of form and operation which must therefore be included in the protection hereby sought.

## Claims

1. Hinged press table fitted with an automatic safety device designed to lower it immediately in case of overload, characterized in that it is made up of a table (1) capable of movement in the vertical direction for which it is assembled at its ends upon guides and a fixed counter-table (2) interconnected by an articulated mechanism that transmits the effort from the table (1) to the counter-table (2), said articulated mechanism being made up of two upper parts (3) articulately assembled in the lower part of the table (1) and two lower parts (4) articulately assembled in the upper part of the counter-table (2), the upper (3) and lower (4) parts being articulately joined at their free ends through a central swivelling joint, the table (1) being kept in the working position by the action of an electromagnet (6) located below the counter-table (2), attracting a counterweight (5) attached by its ends, through a slot located in the center of the counter-table (2), by way of adjustable rods (7) to the central swiveling joint, so that the electric current of the electromagnet (6) cuts off whenever there is a press overload, causing the counterweight (5) to fall and lowering the table (1) by acting upon the central swiveling joint.

2. Press table as per claim 1, characterized in that between the table (1) and the counter-table (2) there are cylinders (9) arranged that act as dampers which function is to return the table (1) to its working position and regulate the heigth of the table (1).

3. Press table as per claim 1, characterized in that the counter-table (2) is fitted at its upper portion with stops (8) which function is to limit the fall of the table (1).

4. Press table as per claim 1, characterized in that the press frame is fitted with stops (21) which function is to limit the travel of the table (1) and a stop (11) to limit the fall of the counterweight (5).

5. Press table as per claim 1, characterized in that the angle (α) that form the corresponding parts (3, 4) of the articulated mechanism with the main axis of said mechanism must be greater than 0° in order to avoid blocking, but not too large so as to avoid overloading excessively the effort that the rods (7) transmit to the counterweight (5).

## Patentansprüche

1. Ein Tisch mit Scharnieren für Pressen, ausgerüstet mit einer automatischen Sicherheitsvorrichtung, so konstruiert, dass der Tisch bei Überlast sofort gesenkt wird, dadurch gekennzeichnet, dass er ausgehend von einem vertikal verstellbaren Tisch (1), der an seinen Enden auf Führungen montiert ist, und von einem Gegentisch (2) konstruiert ist, wobei beide fest über einen Gelenkmechanismus miteinander verbunden sind; dieser Gelenkmechanismus überträgt die Kraft vom Tisch (1) auf den Gegentisch (2) und setzt sich aus zwei Oberteilen (3), die gelenkartig am Unterteil des Tisches (1) montiert sind und zwei Unterteilen (4), die gelenkartig mit dem Oberteil des Gegentisches (2) verbunden sind, zusammen, wobei sowohl der Oberteil (3) als auch der Unterteil (4) gelenkig an den freien Enden über eine Schwenkdichtung verbunden sind, wobei der Tisch (1) mittels der Wirkung eines unter dem Gegentisch (2) liegenden Elektromagnetes (6) in seiner Arbeitsstellung gehalten wird; dieser Elektromagnet (6) zieht ein Gegengewicht (5) an, das an seinem Ende über eine in der Mitte des Gegentisches (2) sitzende Rille befestigt ist, mittels Rollen (7), die mit bezug auf die zentrale Schwenkdichtung einstellbar sind, so dass die Stromzufuhr des Elektromagnets (6) immer unterbrochen wird, wenn eine Überlastung der Presse auftritt, wodurch das Gegengewicht (5) fällt und den Tisch (1) absenkt, dank der Wirkung auf die zentrale Schwenkdichtung.

2. Ein Pressetisch gemäss Anspruch 1, dadurch gekennzeichnet, dass zwischen dem Tisch (1) und dem Gegentisch (2) Zylinder (9) vorgesehen sind, die so angeordnet sind, dass sie als Dämpfer wirken, deren Funktion ist, den Tisch (1) wieder in seine Arbeitsstellung zurückzusetzen und die Tischhöhe (1) zu regulieren.

3. Ein Pressetisch gemäss Anspruch 1, dadurch gekennzeichnet, dass der Gegentisch (2) an seinem Oberteil Anschläge (8) aufweist, deren Funktion ist, die Absenkstrecke des Tisches (1) zu begrenzen.

4. Ein Pressetisch gemäss Anspruch 1, dadurch gekennzeichnet, dass das Pressegestell mit Anschlägen (21) versehen ist, deren Funktion ist, die Tischstrecke (1) zu begrenzen, und mit einen Anschlag (11) zur Begrenzung der Fallstrecke des Gegengewichtes 85).

5. Ein Pressetisch gemäss Anspruch 1, dadurch gekennzeichnet, dass der Winkel (a), den die entsprechenden Teile (3, 4) des Gelenkmechanismus mit der Hauptachse dieses Mechanismus bilden, grösser als 0^{º} sein muss, um die Blockierung zu vermeiden, aber nicht zu gross sein darf, um zu sehr die von den Rollen (7) auf das Gegengewicht (5) übertragene Kraft zu erhöhen.

## Revendications

1. Table à charnières pour presse, pourvue d'un dispositif automatique de sécurité conçu pour l'abaisser immédiatement en cas de surcharge, caractérisée en ce qu'elle est construite à partir d'une table (1) susceptible de se déplacer dans la direction verticale, pour ce dont elle est montée à ses extrémités de glissières et d'une contre-table (2) fixe interconnectées au moyen d'un mécanisme articulé qui transmet l'effort depuis la table (1) jusqu'à la contre-table (2), ce mécanisme articulé étant constitué de deux parties (3) supérieures montées par articulation à la partie inférieure de la table (1) et deux parties inférieures montées par articulation à la partie supérieure de la contre-table (2), les parties (3) supérieure et (4) inférieure étant unies par articulation par leurs extrémités libres à travers un joint basculant, la table (1) se maintenant dans la position de travail par l'action d'un électro-aimant (6) situé au-dessous de la contre-table (2) qui attire un contrepoids (5) fixé par son extrémité à travers une rainure située au centre de la contre-table (2), au moyen de rouleaux (7) ajustables par rapport au joint central basculant, de sorte que le courant électrique de l'électro-aimant s'interrompt chaque fois qu'il y a surcharge de la presse, en faisant tomber le contrepoids (5) et abaisser la table (1) grâce à l'action sur le joint basculant central.

2. Table pour presse selon la revendication 1, caractérisée en ce qu'entre la table (1) et la contre-table (2) il y a des cylindres (9) disposés de sorte à agir comme des amortisseurs dont la fonction est de faire revenir la table (1) à sa position de travail et de régler la hauteur de la table (1).

3. Table pour presse selon la revendication 1, caractérisée en ce que la contre-table (2) est pourvue à sa partie supérieure de butées (8) dont la fonction consiste à limiter la chute de la table (1).

4. Table pour presse selon la revendication 1, caractérisée en ce que le bâti de la presse est pourvu de butées (21) dont la fonction est de limiter la parcours de la table (1) et d'une butée (11) pour limiter la chute du contrepoids (5).

5. Table pour presse selon la revendication 1, caractérisée en ce que l'angle (α) que forment les parties (3, 4) correspondantes du mécanisme articulé avec l'axe principal de ce mécanisme, doit être supérieur à 0^{º} afin d'éviter le blocage, mais pas trop grand de sorte à éviter de surcharger excessivement l'effort que transmettent les rouleaux (7) jusqu'au contrepoids (5).
